# EUROPÄISCHE PATENTSCHRIFT

(11) **EP 4 255 610 B1**
(45) Veröffentlichungstag und Bekanntmachung des Hinweises auf die Patenterteilung: **09.04.2025**
(21) Anmeldenummer: 21824523.1
(22) Anmeldetag: 02.12.2021
(51) Int. Cl.: B01D 53/32, B01D 53/72, B64D 13/00, B64D 13/06, F24F 8/26

(54) **LUFTREINIGUNGSEINRICHTUNG UND LUFTREINIGUNGSSYSTEM SOWIE VERFAHREN ZUR REINIGUNG EINER LUFTREINIGUNGSEINRICHTUNG UND EINES LUFTREINIGUNGSSYSTEMS**
AIR PURIFICATION DEVICE AND AIR PURIFICATION SYSTEM, AND METHOD FOR CLEANING AN AIR PURIFICATION DEVICE AND AIR PURIFICATION SYSTEM
DISPOSITIF DE PURIFICATION D'AIR, SYSTÈME DE PURIFICATION D'AIR ET PROCÉDÉ DE PURIFICATION D`UN DISPOSITIF DE PURIFICATION D'AIR ET D'UN SYSTÈME DE PURIFICATION D'AIR

(30) Priorität: 06.12.2020 DE 102020132372
(43) Veröffentlichungstag der Anmeldung: 11.10.2023
(73) Patentinhaber: Dornier No Limits GmbH, 80538 München (DE)
(72) Erfinder: DORNIER, Irén, 81679 München (DE)
(74) Vertreter: Schlimme, Wolfram
(86) Internationale Anmeldenummer: PCT/EP2021/083973
(87) Internationale Veröffentlichungsnummer: WO 2022/117730

(56) Entgegenhaltungen:
- DE-A1- 102016 004 857
- JP-A- H08 243 432
- JP-A- H11 319 063
- US-A1- 2009 227 195
- US-A1- 2009 311 138

## Beschreibung

### TECHNISCHES GEBIET

Die vorliegende Erfindung betrifft eine Luftreinigungseinrichtung nach dem Oberbegriff des Patentanspruchs 1. Sie betrifft weiterhin ein Luftreinigungssystem für zumindest einen im Wesentlichen geschlossenen Raum, insbesondere einen Innenraum einer Fahrzeugkabine wie beispielsweise den Passagierraum eines Luftfahrzeugs, mit einer solchen Luftreinigungseinrichtung. Die Luftreinigungseinrichtung nach der Erfindung ist jedoch nicht auf den Einsatz in einem Luftreinigungssystem von Luftfahrzeugen beschränkt, sondern kann in allen Luftreinigungssystemen für stationäre oder mobile Räume realisiert sein, in denen sich Menschen und/oder Tiere temporär aufhalten. Weiterhin betrifft die Erfindung ein Verfahren zur Reinigung einer Luftreinigungseinrichtung sowie eines Luftreinigungssystems für zumindest einen im Wesentlichen geschlossenen Raum.

### HINTERGRUND DER ERFINDUNG

Luftreinigungseinrichtungen für geschlossene Räume sind häufig dezentral außerhalb der Räume vorgesehen, beispielsweise in raum integrierte oder gebäudeintegrierte Heizungs- und/oder Klimaanlagensysteme integriert, wobei die Luft des Raums durch die außerhalb des Raums vorgesehene Luftreinigungseinrichtung hindurch umgewälzt wird. Dabei wird die Luft aus dem Raum durch eine Abluftkanalanordnung zur Luftreinigungseinrichtung hingeführt. Dort werden üblicherweise zunächst grobe Schmutz- und Staubpartikel durch mechanische Vorfilter aus der Luft entfernt. In einem Elektrofiltermodul, das zum Beispiel einen Ionisator aufweist, werden dann biologische Schadstoffe wie beispielsweise Viren, Bakterien und/oder Pilzsporen abgetötet oder biologisch deaktiviert. Anschließend wird die Luft durch eine weitere mechanische Filtereinrichtung geleitet, in der beispielsweise mechanische Feinfilter, wie HEPA-Filter, und/oder Schadgasfilter (zum Beispiel Aktivkohlefilter oder Molekularsiebfilter) enthalten sind, um chemische Schadstoffe aus der Luft zu entfernen. Anschließend wird die gereinigte Luft durch eine Reinluftkanalanordnung zurück in den Raum geleitet. Es kann sowohl in einer solchen Luftreinigungseinrichtung als auch bei derartigen Luftreinigungssystemen in der Abluftkanalanordnung zwischen dem Raum und der Luftreinigungseinrichtung zu Ablagerungen und Anhäufungen von biologischen Luftschadstoffen kommen, die bereits hier vor der Luftreinigungseinrichtung abgeschieden werden und von der Luftreinigung nicht erfasst werden. Eine dadurch bedingte biologische Kontamination der Luftreinigungseinrichtung und der Abluftkanalanordnung kann über einen längeren Zeitraum zu einer "Rückwärtskontamination" des Raums führen.

### STAND DER TECHNIK

In den deutschen Patentanmeldung DE 10 2020 121 872 A1 wird ein gattungsgemäßes Luftreinigungssystem beschrieben, das beispielsweise die Luft in einer Passagierkabine eines Luftfahrzeugs reinigt. Zur Deaktivierung von biologischen Luftbelastungen ist darin ein von der zu reinigenden Luft durchströmtes Elektrofiltermodul vorgesehen, das zumindest eine Hochspannungselektrode und zumindest eine Steuerelektrode aufweist, zwischen denen durch Anlegen einer von einem Stromversorgungsmodul bereitgestellten elektrischen Hochspannung ein elektrisches Feld erzeugbar ist.

Der Aufbau und die Wirkungsweise eines als Ionisationsmodul ausgebildeten Elektrofiltermoduls werden beispielhaft in der US 6 413 301 B1 und der WO 02/16042 A2 ausführlich beschrieben. In der deutschen Patentanmeldung DE 10 2020 122 848 A1 der vorliegenden Anmelderin wird erwähnt, dass im Inneren eines Luftführungs-Tafelelements, das Bestandteil eines zu einer Luftreinigungseinrichtung hin führenden Luftkanalsystem ist, UVC-Lichtquellen vorgesehen sind, durch die sich bei Bedarf das Innere des Luftführungs-Tafelelements entkeimen lässt und sich dort angesammelte Viren, Bakterien und Pilze abtöten lassen. Hierzu ist allerdings das Vorsehen einer zusätzlichen Beleuchtungs-Infrastruktur für die UVC-Lichtquellen erforderlich.

Aus der JP 2002 - 103 959 A ist ein Luftreinigungsgerät für Gebäudeinnenräume bekannt, das ein Gebläse, ein elektrostatisches Filter und einen Ozongenerator aufweist. Durch Reversieren der Gebläselaufrichtung kann angesaugte Luft in zwei entgegengesetzten Richtungen durch das Luftreinigungsgerät geleitet werden, wobei die Strömungsrichtung der Luft je nach Bedarf umgekehrt werden kann, je nachdem, ob ein Ausströmen der Luft in Bodennähe oder in Kopfhöhe gewünscht ist. In Zeiten, in denen sich keine Personen im Gebäude bzw. im Innenraum aufhalten, kann die Luft mittels des Ozongenerators hochkonzentriert mit Ozon angereichert werden, um den Raum zu desodorieren und zu sterilisieren.

Aus der JP 2003 - 106 600 A ist ein Luftreinigungsgerät bekannt, das ein elektrostatisches Staubfilter, in dem Ozon entstehen kann, mehrere Wärmetauscher, ein Gebläse und einen Ionengenerator aufweist, in dem ebenfalls Ozon erzeugt werden kann. Die zu behandelnde Luft wird durch einen Lufteinlass angesaugt, strömt durch das elektrostatische Staubfilter und durch die Wärmetauscher und wird am Ionengenerator vorbei zu einem Luftauslass geleitet. Dieses Luftreinigungsgerät kann in einem Reinigungsmodus betrieben werden, in dem das Gebläse in einem Reversierbetrieb betrieben wird, wobei die Luft vom Luftauslass am Ionisator vorbei und/oder durch das elektrostatische Staubfilter, wo sie jeweils mit Ozon angereichert wird, in das Innere des Luftreinigungsgeräts geleitet wird. Das Luftreinigungsgerät soll auf diese Weise gereinigt werden.

JP H08 243 432 A zeigt und beschreibt ein Luftreinigungsgerät, das in einem Gehäuse - in der Reihenfolge der Durchströmung - ein Vorfilter, einen Ozon erzeugenden Ionisierer, eine Staubsammel-Elektrode und einen Katalysator zur Umsetzung von Ozon in Sauerstoff aufweist. Die zu reinigende Luft wird von einem Gebläse aus einem Raum, in dem das Luftreinigungsgerät vorgesehen ist, durch die vorstehend beschriebene Anordnung hindurchgesaugt und zurück in den Raum geblasen. Eine Reinigung des Luftreinigungsgeräts selbst ist nicht vorgesehen.

### DARSTELLUNG DER ERFINDUNG

Aufgabe der vorliegenden Erfindung ist es, eine gattungsgemäße Luftreinigungseinrichtung und ein gattungsgemäßes Luftreinigungssystem so zu verbessern, dass auch eine biologische Dekontamination der zur Luftreinigungseinrichtung führenden Luftkanäle ohne größeren apparativen Zusatzaufwand möglich ist, sowie ein entsprechendes Verfahren zur Reinigung einer derartigen Luftreinigungseinrichtung und eines derartigen Luftreinigungssystems anzugeben.

Der auf die Luftreinigungseinrichtung gerichtete Teil der Aufgabe wird gelöst durch die Luftreinigungseinrichtung mit den Merkmalen des Patentanspruchs 1.

Eine Luftreinigungseinrichtung ist versehen mit zumindest einer Elektrofiltereinheit, zumindest einem Luftfiltermodul und zumindest einer Luftfördereinrichtung zur Förderung von durch zumindest einen Rohlufteinlass für zu reinigende Luft angesaugter Luft in einer Hauptströmungsrichtung durch die Elektrofiltereinheit und durch das zumindest eine Luftfiltermodul zu zumindest einem Reinluftauslass für gereinigte Luft, wobei die Luftreinigungseinrichtung zwischen einem Luftreinigungsbetrieb, in dem die Luft in der Hauptströmungsrichtung strömt, und einem Systemreinigungsbetrieb, in dem die Luft zumindest partiell im Gegenstrom zur Hauptströmungsrichtung durch die Luftreinigungseinrichtung strömt und durch den zumindest einen Rohlufteinlass aus der Luftreinigungseinrichtung austritt, umschaltbar ist, und wobei die Elektrofiltereinheit im Systemreinigungsbetrieb zur Erzeugung von Ozon aktiviert oder aktivierbar ist, um die durch die Elektrofiltereinheit strömende Luft mit Ozon anzureichern. Erfindungsgemäß ist dabei vorgesehen, dass die Luftreinigungseinrichtung so ausgebildet ist, dass Luftfiltermodule im Systemreinigungsbetrieb nicht entgegen ihrer jeweiligen lokalen Hauptströmungsrichtung von der Luft durchströmt werden.

Unter einer "lokalen Hauptströmungsrichtung" ist die Strömungsrichtung in einem Luftfiltermodul zu verstehen, in der das Luftfiltermodul im Filtrationsbetrieb, also im regulären Luftreinigungsbetrieb, durchströmt wird. Unter einem "Luftreinigungsbetrieb" wird ein Betriebszustand der Luftreinigungseinrichtung verstanden, in dem die Luft in einer Hauptströmungsrichtung vom Rohlufteinlass durch die Elektrofiltereinheit und durch andere eventuell vorgesehene Filtermodule zum Reinluftauslass strömt. Unter einem "Strömungsumkehrbetrieb" wird ein Betriebszustand verstanden, in dem die Luft zumindest in Bereichen der Luftreinigungseinrichtung entgegen der Hauptströmungsrichtung, also zumindest partiell im Gegenstrom, durch die Luftreinigungseinrichtung fließt und durch den Rohlufteinlass aus dieser austritt. Unter "Systemreinigungsbetrieb" wird ein Betriebszustand verstanden, in dem die Luft im Strömungsumkehrbetrieb durch die Luftreinigungseinrichtung strömt und dabei - in Hauptströmungsrichtung oder im Gegenstrom - durch die Ozon erzeugende Elektrofiltereinheit strömt.

### VORTEILE

Die Elektrofiltereinheit, die zumindest eine Hochspannungselektrode und zumindest eine Steuerelektrode aufweist, zwischen denen durch Anlegen einer von einem Stromversorgungsmodul bereitgestellten elektrischen Hochspannung ein elektrisches Feld erzeugbar ist, bildet einen Ionisator, der im Betrieb ein Plasma, vorzugsweise ein Kaltplasma, erzeugt, wobei Ozon freigesetzt wird. Diese Ozonfreisetzung wird üblicherweise im regulären Luftreinigungsbetrieb, in dem die Luft in der Hauptströmungsrichtung durch die Luftreinigungseinrichtung strömt, auf ein Minimum begrenzt, um zu verhindern, dass Ozon in einen mit Menschen (oder Tieren) besetzten Raum eintritt und dort aufgrund seiner hochreaktiven und gesundheitsschädlichen Eigenschaften Schäden anrichtet.

Durch den Strömungsumkehrbetrieb kann jedoch dann, wenn der Raum nicht mit Menschen (oder Tieren) besetzt ist, ein Systemreinigungsbetrieb durchgeführt werden, bei dem in der Elektrofiltereinheit gezielt und bewusst mit Ozon angereicherte Luft von der Elektrofiltereinheit entgegen der Hauptströmungsrichtung durch die Luftreinigungseinrichtung geleitet. Das Ozon entfaltet dabei dort seine desinfizierende Wirkung und tötet oder deaktiviert biologische Schadstoffe, die sich in der Luftreinigungseinrichtung und gegebenenfalls auch im Raum abgelagert haben. Das Vermeiden einer Durchströmung einzelner oder aller Luftfiltermodule im Systemreinigungsbetrieb entgegen ihrer jeweiligen lokalen Hauptströmungsrichtung sorgt dafür, dass keine Freisetzung von bereits im jeweiligen Luftfiltermodul angelagerten Schadstoffen durch eine Filter-Rückspülung erfolgt.

Weitere bevorzugte und vorteilhafte Ausgestaltungsmerkmale der erfindungsgemäßen Luftreinigungseinrichtung sind Gegenstand der Unteransprüche 2 bis 10.

Vorzugsweise ist die Luftreinigungseinrichtung so ausgebildet, dass die Luftfiltermodule zur Partikel- oder Schwebstoffabscheidung im Systemreinigungsbetrieb nicht entgegen der lokalen Hauptströmungsrichtung von der Luft durchströmt werden. Hierdurch wird eine Filterrückspülung konkret jener Luftfiltereinrichtungen vermieden, die im Luftreinigungsbetrieb partikelförmige Schadstoffe durch Siebung oder durch Filtration zurückhalten, also beispielsweise durch Adsorption an ein Filtermaterial anlagern. Folglich werden derartige partikelförmige Filterbeladungen im Systemreinigungsbetrieb nicht wieder freigesetzt.

Vorzugsweise ist die Luftreinigungseinrichtung so ausgebildet, dass im Systemreinigungsbetrieb zumindest ein Teil der Luftfiltermodule, also zumindest eines, in der lokalen Hauptströmungsrichtung von der mit Ozon angereicherten Luft durchströmt wird.

Eine besonders einfache und kostengünstige Variante der Erfindung zeichnet sich dadurch aus, dass zur Durchführung des Strömungsumkehrbetriebs die Luftförderrichtung der Luftfördereinrichtung umkehrbar ist. Ist die Luftfördereinrichtung beispielsweise von einem Gebläse gebildet oder weist sie ein solches auf, so kann der Propeller beziehungsweise das Lüfterrad des Gebläses in einen Rückwärtslauf entgegen der Standarddrehrichtung geschaltet und entgegen der Hauptströmungsrichtung betrieben werden. Dabei fördert das Gebläse - wenn auch mit viel geringem Volumenstrom und schlechterem Wirkungsgrad - Luft entgegen der Hauptströmungsrichtung quasi durch den Rohlufteinlass zurück in den Raum und es erfolgt so ein Systemreinigungsbetrieb. Es können aber auch entsprechende Luftleitkanäle und geeignete Ventilanordnungen vorgesehen sein, durch die die Luft zurück zum Rohlufteinlass geführt wird.

Besonders vorteilhaft ist eine Ausführungsform, bei der die Elektrofiltereinheit so ausgebildet ist, dass sie in einem ersten Betriebszustand (im Luftreinigungsbetrieb) eine geringere Ozonmenge produziert als in einem zweiten Betriebszustand (im Systemreinigungsbetrieb), wobei die Elektrofiltereinheit im Strömungsumkehrbetrieb der Luftfördereinrichtung, also im Systemreinigungsbetrieb, in den zweiten Betriebszustand schaltbar oder geschaltet ist.

In einer bevorzugten Ausführungsform der erfindungsgemäßen Luftreinigungseinrichtung, die mit anderen Ausführungsformen kombinierbar ist, ist vorteilhafterweise in Hauptströmungsrichtung hinter der Elektrofiltereinheit zumindest eine Filtereinheit mit zumindest einem Filter zur Partikelabscheidung und/oder mit zumindest einem Filter zur Abscheidung von chemischen Luftbelastungen vorgesehen und der Strömungsweg der Luft von der Elektrofiltereinheit durch diese nachgeordnete Filtereinheit zum Reinluftauslass ist im Strömungsumkehrbetrieb, also im Systemreinigungsbetrieb, beispielsweise durch eine Ventilanordnung, absperrbar oder abgesperrt. Dadurch wird gewährleistet, dass die mit Ozon angereicherte Luft ausgehend vom Elektrofiltermodul, in dem das Ozon gebildet wird, nicht durch diese Filtereinheit, sondern nur entgegen der Hauptströmungsrichtung strömt und dadurch in der nachgeschalteten Filtereinheit keine Schäden hervorruft. Das ist insbesondere dann von Vorteil, wenn die Filtereinheit Filter enthält, die durch die hohe Oxidationsfähigkeit von Ozon beschädigt werden können, oder wenn die Filtereinheit ein Aktivkohlefilter aufweist, das das zu Reinigungszwecken erwünschte Ozon aus der Luft entfernen würde. Vorzugsweise strömt die mit Ozon angereicherte Luft im Systemreinigungsbetrieb daher nicht durch Aktivkohlefilter aufweisende Filtereinheiten.

In einer anderen bevorzugten Ausführungsform der erfindungsgemäßen Luftreinigungseinrichtung, die mit anderen Ausführungsformen kombinierbar ist, ist die Luftreinigungseinrichtung vorzugsweise mit einem Hilfslufteinlass versehen ist, durch den im Systemreinigungsbetrieb der Elektrofiltereinheit Luft zuführbar ist. Dieser Hilfslufteinlass ermöglicht es der Elektrofiltereinheit, Luft, zum Beispiel Umgebungsluft, für den Systemreinigungsbetrieb von außen oder an der nachgeordneten Filtereinheit vorbei anzusaugen.

Vorzugsweise ist der Hilfslufteinlass dabei in Hauptströmungsrichtung der Luft hinter der Elektrofiltereinheit vorgesehen. Dadurch wird die Elektrofiltereinheit im Systemreinigungsbetrieb rückwärts durchströmt. Der Hilfslufteinlass kann allerdings auch - in Hauptströmungsrichtung - vor der Elektrofiltereinheit vorgesehen sein, sodass die Elektrofiltereinheit auch im Systemreinigungsbetrieb vorwärts durchströmt wird, wobei allerdings eine Strömungsumkehrvorrichtung vorgesehen sein muss, um die durch die Elektrofiltereinheit hindurch geströmte Luft im Systemreinigungsbetrieb zurück zum Rohlufteinlass und zur Abluftkanalanordnung zu leiten.

Eine weitere bevorzugte Ausführungsform der erfindungsgemäßen Luftreinigungseinrichtung, die mit anderen Ausführungsformen kombinierbar ist, zeichnet sich dadurch aus, dass vor der Elektrofiltereinheit ein Vorfiltermodul zur Partikelabscheidung vorgesehen ist, das mit einem schaltbaren Bypass versehen ist, durch den die mit Ozon angereicherte Luft im Systemreinigungsbetrieb am Vorfiltermodul vorbei zu dem zumindest einen Rohlufteinlass leitbar ist. Bei dieser Variante wird durch den Bypass gewährleistet, dass die von der Elektrofiltereinheit zur Abluftkanalanordnung strömende Luft das mechanische Vorfiltermodul nicht rückwärts durchströmt. Dadurch wird eine Rückspülung des Vorfiltermoduls verhindert, durch welche bereits ausgefilterte Schadpartikel wieder in die Luft gelangen könnten.

In noch einer anderen, zur vorgenannten Variante alternativen Ausführungsform der erfindungsgemäßen Luftreinigungseinrichtung, die mit anderen Ausführungsformen kombinierbar ist, ist vorgesehen, dass vor der Elektrofiltereinheit ein Vorfiltermodul zur Partikelabscheidung vorgesehen ist, das mit einem ersten schaltbaren Bypass versehen ist, durch den die mit Ozon angereicherte Luft im Systemreinigungsbetrieb vor das Vorfiltermodul führbar ist, und das mit einem zweiten schaltbaren Bypass versehen ist, durch den die in der lokalen Hauptströmungsrichtung durch das Vorfiltermodul strömende, mit Ozon angereicherte Luft zu dem zumindest einen Rohlufteinlass führbar ist. Diese Variante ermöglicht es, im Systemreinigungsbetrieb auch das Vorfiltermodul in seiner lokalen Hauptströmungsrichtung mit der mit Ozon angereicherten Luft zu durchströmen, bevor diese Luft zur Abluftkanalanordnung geleitet wird. Dadurch kann auch das Vorfiltermodul desinfiziert werden.

Die auf das Luftreinigungssystem gerichtete Aufgabe wird gelöst durch das Luftreinigungssystem mit den Merkmalen des Anspruchs 11.

Ein Luftreinigungssystem für zumindest einen im Wesentlichen geschlossenen Raum, insbesondere einen Innenraum einer Fahrzeugkabine, ist versehen mit einer erfindungsgemäßen Luftreinigungseinrichtung, wobei der zumindest eine Raum durch eine Abluftkanalanordnung mit dem zumindest einen Rohlufteinlass der Luftreinigungseinrichtung verbunden ist und wobei der zumindest eine Raum durch eine Reinluftkanalanordnung mit dem zumindest einen Reinluftauslass der Luftreinigungseinrichtung verbunden ist. Dabei ist erfindungsgemäß vorgesehen, dass die Luftreinigungseinrichtung so ausgebildet ist, dass die mit Ozon angereicherte Luft in dem auch als Systemreinigungsbetrieb bezeichneten Strömungsumkehrbetrieb durch den zumindest einen Rohlufteinlass der Luftreinigungseinrichtung in die Abluftkanalanordnung des Raums förderbar ist.

Bei einem solchen Luftreinigungssystem wird die Reinigungs- und Desinfektionswirkung, die mit der erfindungsgemäßen Luftreinigungseinheit erzielbar ist, auf den Raum und dessen zur Luftreinigungseinheit führende Abluftkanalanordnung erstreckt. Durch den Strömungsumkehrbetrieb kann der Systemreinigungsbetrieb dann, wenn der Raum nicht mit Menschen (oder Tieren) besetzt ist, auf den Raum und dessen Abluftkanalanordnung ausgedehnt werden. Werden. Das Ozon entfaltet dabei auch dort seine desinfizierende Wirkung und tötet oder deaktiviert biologische Schadstoffe, die sich insbesondere in der Abluftkanalanordnung, beispielsweise an dortigen Wänden, abgelagert haben.

Der auf das Verfahren zum Reinigen einer Luftreinigungseinrichtung gerichtete Teil der Aufgabe wird gelöst durch das Verfahren gemäß Anspruch 12, das gemäß Anspruch 13 insbesondere bei einem erfindungsgemäßen Luftreinigungssystem, aber auch in anderen Luftreinigungssystemen für geschlossene Räume einsetzbar ist.

Bei diesem Verfahren zum Reinigen einer erfindungsgemäße Luftreinigungseinrichtung, in der zu reinigende Luft in einem Luftreinigungsbetrieb durch zumindest einen Rohlufteinlass in einer Hauptströmungsrichtung durch eine Elektrofiltereinheit und durch zumindest ein Filtermodul zu zumindest einem Reinluftauslass für gereinigte Luft gefördert wird und die zwischen diesem Luftreinigungsbetrieb und einem Systemreinigungsbetrieb, in dem die Luft zumindest partiell im Gegenstrom zur Hauptströmungsrichtung durch die Luftreinigungseinrichtung strömt, umschaltbar ist, ist erfindungsgemäß ein Systemreinigungsbetrieb vorgesehen, in dem Luft in der Elektrofiltereinheit mit von dieser erzeugtem Ozon angereichert wird und im Systemreinigungsbetrieb durch die Luftreinigungseinrichtung strömt, wo sie dann durch den zumindest einen Rohlufteinlass aus der Luftreinigungseinrichtung austritt, wobei die Filtermodule im Systemreinigungsbetrieb nicht entgegen ihrer jeweiligen lokalen Hauptströmungsrichtung von der Luft durchströmt werden. Die Vorteile dieses erfindungsgemäßen Verfahrens entsprechen den bereits oben in Verbindung mit der entsprechenden Vorrichtung aufgeführten Vorteilen. Insbesondere wird dadurch auf einfache Weise eine in Intervallen durchführbare Reinigungsmöglichkeit für in Hauptströmungsrichtung vor der Elektrofiltereinheit vorgesehene Komponenten der Luftreinigungseinrichtung geschaffen.

Vorzugsweise erfolgt beim Systemreinigungsbetrieb keine Durchströmung von in der Luftreinigungseinrichtung vorhandenen Luftfiltermodulen zur Partikel- oder Schwebstoffabscheidung im Gegenstrom zur jeweiligen lokalen Hauptströmungsrichtung. So wird, wie es oben bereits ausgeführt wurde, eine Filterrückspülung vermieden.

Der auf das Verfahren zum Reinigen eines Luftreinigungssystems gerichtete Teil der Aufgabe wird gelöst durch ein Verfahren mit den Merkmalen des Anspruchs 14.

Bei diesem Verfahren zum Reinigen eines Luftreinigungssystems für zumindest einen im Wesentlichen geschlossenen Raum ist das erfindungsgemäße Verfahren zum Reinigen der Luftreinigungseinrichtung implementiert. Die beim Systemreinigungsbetrieb durch den zumindest einen Rohlufteinlass aus der Luftreinigungseinrichtung austretende und mit Ozon angereicherte Luft wird dabei durch die Abluftkanalanordnung in den Raum gefördert und entfaltet so die desinfizierende und desodorierende Wirkung auch im Raum und in dessen Abluftkanalanordnung. Insbesondere wird dadurch auf einfache Weise auch eine in Intervallen durchführbare Reinigungsmöglichkeit für in Hauptströmungsrichtung vor der Luftreinigungseinrichtung vorgesehene Komponenten des Luftreinigungssystems geschaffen.

Schließlich ist von der Erfindung auch ein Fahrzeug, insbesondere ein Luftfahrzeug, mit einem erfindungsgemäßen Luftreinigungssystem umfasst.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: einen Querschnitt durch eine Passagierkabine und eine schematische Anordnung einer Lüftungs- und Klimatisierungsvorrichtung im Rumpf eines Luftfahrzeugs;
- Fig. 2: ein Schema des Aufbaus eines Ausführungsbeispiels eines erfindungsgemäßen Fahrzeuginnenraum-Luftreinigungssystems in einem Luftfahrzeug;
- Fig. 3: Ein verfahrenstechnisches Schaubild des erfindungsgemäßen Fahrzeuginnenraum-Luftreinigungssystems im Luftreinigungsbetrieb mit der Luftströmung in der Hauptströmungsrichtung;
- Fig. 4: Ein verfahrenstechnisches Schaubild einer ersten speziell für einen Systemreinigungsbetrieb ausgestalteten Variante mit einer partiellen Luftströmung im Gegenstrom;
- Fig. 5: ein verfahrenstechnisches Schaubild einer zweiten speziell für einen Systemreinigungsbetrieb ausgestalteten Variante mit einer partiellen Luftströmung im Gegenstrom und
- Fig. 6: ein verfahrenstechnisches Schaubild einer dritten speziell für einen Systemreinigungsbetrieb ausgestalteten Variante mit einer partiellen Luftströmung im Gegenstrom.

### DARSTELLUNG VON BEVORZUGTEN AUSFÜHRUNGSBEISPIELEN

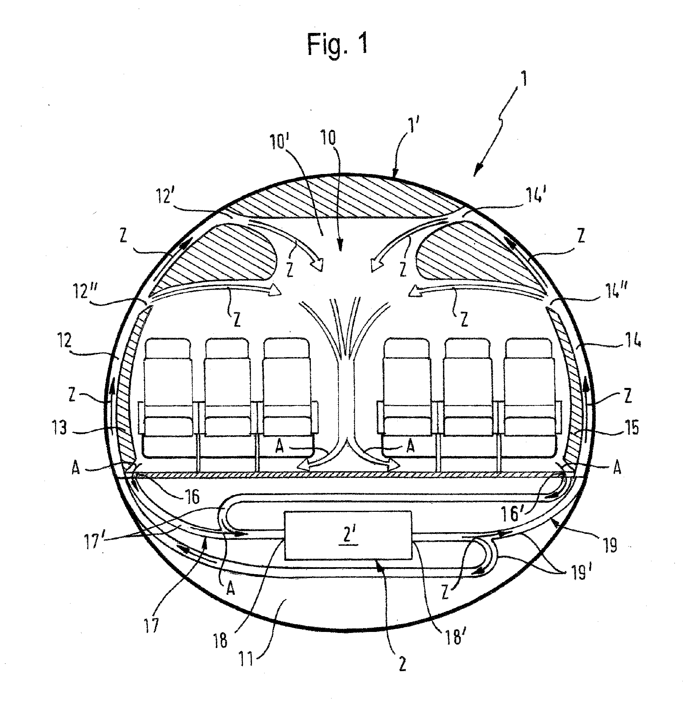

Fig. 1 zeigt einen schematischen Querschnitt durch den Rumpf 1' eines Luftfahrzeugs 1, dessen oberer Teil den die Passagierkabine des Luftfahrzeugs 1, also einen eine Fahrzeugkabine 10' bildenden Raum 10 aufnimmt, dessen Luft durch ein erfindungsgemäßes Luftreinigungssystem 2 gereinigt wird. Das Luftreinigungssystem 2 weist eine Luftreinigungseinrichtung 2' auf, die üblicherweise Teil einer hier nicht näher beschriebenen Lüftungs- und Klimatisierungsvorrichtung des Luftfahrzeugs 1 ist.

Die Zuluft Z für den Raum 10 wird an den Außenseiten der Fahrzeugkabine 10' in Zuluftkanälen 12, 14, die hinter einer Kabinen-Wandverkleidung 13, 15 vorgesehen sind, nach oben geführt und durch Luftauslässe 12', 12", 14', 14" im oberen Bereich der Fahrzeugkabine 10' in die Fahrzeugkabine 10' eingeleitet. Die Zuluftkanäle 12, 14 der Fahrzeugkabine 10' stehen in Fluidverbindung mit Zuluftkanälen 19' unterhalb der Fahrzeugkabine 10' und bilden mit diesen eine Reinluftkanalanordnung 19.

Die Zuluft Z sinkt im Inneren der Fahrzeugkabine 10' nach unten und vermischt sich auf diesem Weg mit der von den Passagieren ausgeatmeten Luft und anderen Körperausdunstungen der Passagiere und wird als Abluft A im unteren Bereich der Fahrzeugkabine 10' durch Abluftkanäle 16, 16' aus der Fahrzeugkabine 10' abgeführt. Die Abluftkanäle 16, 16' der Fahrzeugkabine 10' stehen in Fluidverbindung mit Abluftkanälen 17' unterhalb der Fahrzeugkabine 10' und bilden mit diesen eine Abluftkanalanordnung 17 die mit zumindest einem Rohlufteinlass 18 der Luftreinigungseinrichtung 2' in Fluidverbindung steht.

Die Abluft A mit den darin enthaltenen Schadpartikeln P wird über die Abluftkanalanordnung 17 der Luftreinigungseinrichtung 2' zugeführt, die in einem Technikraum 11 im Rumpf des Luftfahrzeugs 1 unterhalb der die Fahrzeugkabine 10' bildenden Passagierkabine vorgesehen ist. Die Abluftkanalanordnung 17, die Luftreinigungseinrichtung 2' und die Reinluftkanalanordnung 19 bilden zusammen das Luftreinigungssystem 2.

Die Abluft A aus der Fahrzeugkabine 10' wird der Luftreinigungseinrichtung 2' durch die Abluftkanalanordnung 17 und den Rohlufteinlass 18 zugeführt und in der Luftreinigungseinrichtung 2' von Stäuben, biologischen Luftbelastungen, zum Beispiel von Viren, Bakterien und Pilzsporen, sowie vorzugsweise auch von chemischen Luftbelastungen, zum Beispiel von flüchtigen organischen Verbindungen wie Kohlenwasserstoffen, gereinigt. Dazu wird die Luftreinigungseinrichtung 2' im Luftreinigungsbetrieb von der zu reinigenden Luft in einer Hauptströmungsrichtung V durchströmt. Die gereinigte und gegebenenfalls klimatisierte Luft verlässt die Luftreinigungseinrichtung 2' durch einen Reinluftauslass 18' und wird als Zuluft Z durch die Reinluftkanalanordnung 19 wieder zu den Zuluftkanälen 12, 14 der Fahrzeugkabine 10', also der Passagierkabine, geleitet.

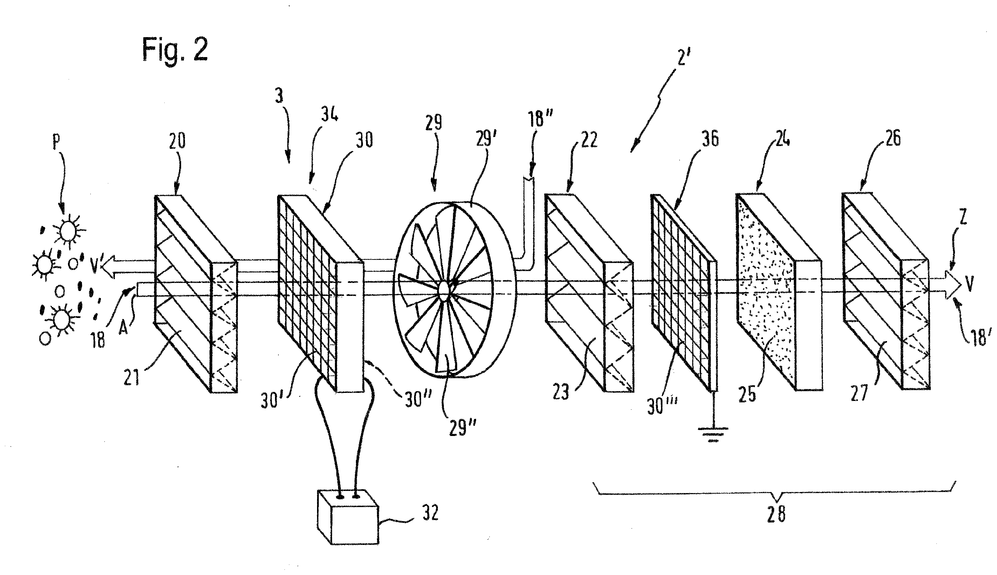

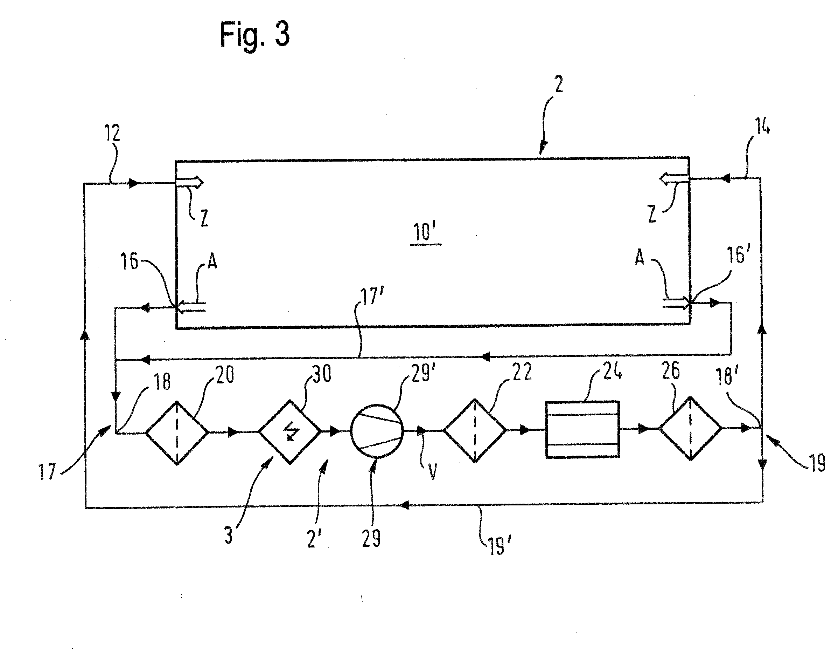

Die in Fig. 2 beispielhaft in auseinandergezogener Darstellung der einzelnen Komponenten gezeigte und in Fig. 3 schematisch als Strömungsschaltbild dargestellte Luftreinigungseinrichtung 2' weist hinter dem Rohlufteinlass 18 ein mechanisches Vorfiltermodul 20 mit zumindest einem Filtermedium 21 auf, mit welchem gröbere Partikel aus der Luft entfernt werden. Als Filtermedium 21 können hier beispielsweise ein mechanisches Grobfilter und/oder ein Hochleistungs-Partikelfilter (EPA-Filter) vorgesehen sein. Danach folgt in Hauptströmungsrichtung V der zu reinigenden Luft eine Elektrofiltereinheit 3 mit einem vorzugsweise von einer (nicht gezeigten) Abschirmeinrichtung umgeben Elektrofiltermodul 30, das weiter unten näher beschrieben wird. Die Abschirmeinrichtung schirmt die Umgebung des Elektrofiltermoduls 30 vor elektromagnetischen Pulsen ab und bildet eine EMV-Abschirmeinrichtung.

Der Elektrofiltereinheit 3 mit dem Elektrofiltermodul 30 ist in der Hauptströmungsrichtung V ein erstes mechanisches Hauptfiltermodul 22 zur Partikel- und Schwebstoffabscheidung mit einem Filtermedium 23 nachgeordnet, das als Schwebstofffilter (HEPA-Filter) ausgebildet ist. Die aus dem ersten Hauptfiltermodul 22 austretende gefilterte Luft tritt dann in ein optional vorgesehenes physikalisch-chemisches Filtermodul 24 mit einem Aktivkohlefilter 25 ein, in welchem chemische Bestandteile aus der Luft entfernt werden. Zusätzlich zum Aktivkohlefilter 25 oder anstelle des Aktivkohlefilters 25 kann auch ein Molekularsiebfilter im physikalisch-chemischen Filtermodul 24 vorgesehen sein, das ebenfalls chemische Stoffe aus der Luft entfernen und an die Filteroberfläche des Molekularsiebfilters anlagern kann. Hinter dem physikalisch-chemischen Filtermodul 24 ist in Hauptströmungsrichtung V ein zweites mechanisches Hauptfiltermodul 26 vorgesehen, das - ähnlich wie das erste Hauptfiltermodul 22 - als Schwebstofffilter ausgestaltet ist und das ein Filtermedium 27 aufweist, welches noch in der Luft vorhandene Schwebstoffe aus der Luft entfernt. Das Filtermedium 27 des zweiten mechanischen Filtermoduls 26 ist ebenfalls von einem HEPA-Filter gebildet.

Zwischen dem Vorfiltermodul 20 und der Elektrofiltereinheit 3 oder zwischen der Elektrofiltereinheit 3 und dem ersten Hauptfiltermodul 22 ist als Luftfördereinrichtung 29 ein Axialgebläse 29' vorgesehen, dessen in eine Vorwärtsrichtung rotierendes Luftschaufelrad 29" die Luftströmung in der Hauptströmungsrichtung V bewirkt.

Die aus dem zweiten, sekundären Filtermodul 26 austretende gereinigte Luft tritt dann aus dem Reinluftauslass 18' der Luftreinigungseinrichtung 2' in die Zuluftkanalanordnung 19 ein und wird als Zuluft Z wieder in die Fahrzeugkabine 10' zurückgeführt.

Das erste mechanisches Hauptfiltermodul 22, das - optional vorgesehene - physikalisch-chemische Filtermodul 24 und das zweite mechanische Hauptfiltermodul 26 bilden eine Filtereinheit 28 zur Partikelabscheidung und/oder zur Abscheidung von chemischen Luftbelastungen stromabwärts des Elektrofiltermoduls 30. Diese Filtereinheit 28 kann zusammen mit der Elektrofiltereinheit 3 und dem Vorfiltermodul vorzugsweise eine integrale Filteranordnung bilden.

Das Elektrofiltermodul 30 der Elektrofiltereinheit 3 weist ein Hochspannungsgitter als Hochspannungselektrode 30' und ein Steuergitter als Steuerelektrode 30" auf, die in Strömungsrichtung V geringfügig voneinander beabstandet sind und zwischen denen eine von einem Stromversorgungsmodul 32 bereitgestellte elektrische Hochspannung anliegt. Die Hochspannungselektrode 30' und die Steuerelektrode 30" bilden eine erste Elektrofilterstufe 34. Anstelle von durchströmten Gitterelektroden können auch Plattenelektroden als Hochspannungselektroden und Steuerelektroden vorgesehen sein, deren Elektrodenzwischenräume von der zu reinigenden Luft durchströmt werden. Die Hochspannungselektroden und die Steuerelektroden sind vorzugsweise mit einer elektrischen Hochspannung (Gleichspannung) von beispielsweise 3 kV bis 10 kV beaufschlagt.

Durch die elektrische Hochspannung zwischen der Hochspannungselektrode 30' und der Steuerelektrode 30" bildet sich im Elektrofiltermodul 30 durch elektrische Entladungen ein Ionisationsfeld aus, durch welches die mechanisch vorgefilterte Abluft A hindurchtritt. Das Elektrofiltermodul 30 bildet daher einen Ionisator, in dem ein kaltes Plasma erzeugt wird. In diesem Ionisationsfeld werden Viren, Bakterien, Milben, Pilzsporen etc. abgetötet beziehungsweise biologisch inaktiviert und verklumpen im Idealfall zu größeren Partikeln, die im stromabwärts gelegenen ersten mechanischen Hauptfiltermodul 22 oder im weiter stromabwärts gelegenen zweiten mechanischen Hauptfiltermodul 26 aus der Luft abgeschieden werden. Im Elektrofiltermodul 30 entsteht bei der Ionisation auch gasförmiges Ozon, das im Luftreinigungsbetrieb zur Entkeimung der Luft und auch des ersten Hauptfiltermoduls 22 beiträgt und das im physikalisch-chemischen Filtermodul wieder aus der Luft entfernt wird.

In Hauptströmungsrichtung V ist stromabwärts des ersten mechanischen Hauptfiltermoduls 22 oder im Inneren des ersten mechanischen Hauptfiltermoduls 22 eine dritte Elektrode 30‴ angeordnet, die als Elektrodenfläche beispielsweise ein Netz oder Gitter aufweist. Die an elektrischer Masse anliegende dritte Elektrode 30‴ bildet zusammen mit der Hochspannungselektrode 30' und/oder der Steuerelektrode 30" des Ionisators eine zweite Elektrofilterstufe 36. Zwischen der ersten Elektrofilterstufe 34 und der dritten Elektrode 26 liegt eine konstante, niedrigere Gleichspannung von beispielsweise 1000 V an. Damit liegt sowohl in der ersten Elektrofilterstufe 34 als auch in der zweiten Elektrofilterstufe 36 eine gegen Masse gemessen elektrisch positive Spannung an, wobei die positive Spannung in der ersten Elektrofilterstufe 34 höher ist als die positive Spannung in der zweiten Elektrofilterstufe 36. Somit ergibt sich trotz geringeren Spannungen als in herkömmlichen Systemen ein starkes elektrischen Feld (typisch bis zu 900 kV/m) durch die relativen Potenziale der Elektroden 30' und 30" innerhalb des einen Ionisator bildenden Elektrofiltermoduls 30 und ein weiteres, schwächeres Feld zwischen dem Ionisator und der dritten Elektrode 30‴, welches die im Ionisator geladenen Teilchen in Richtung des ersten mechanischen Hauptfiltermoduls 22 beschleunigt und somit dort abscheidet.

Die Luftreinigungseinrichtung 2' ist so ausgebildet, dass sie zumindest partiell in einem Systemreinigungsbetrieb betrieben werden kann, in dem durch einen Hilfslufteinlass 18" angesaugte Umgebungsluft durch die Elektrofiltereinheit 30 und im Gegenstrom V' zur Hauptströmungsrichtung V durch den zumindest einen Rohlufteinlass 18 der Luftreinigungseinrichtung 2' in die Abluftkanalanordnung 17 der den Raum 10 bildenden Fahrzeugkabine 10' förderbar ist. Bei diesem Systemreinigungsbetrieb ist die Elektrofiltereinheit 30 zur Erzeugung von Ozon aktiviert.

Während die Elektrofiltereinheit 30 im Luftreinigungsbetrieb, also dann, wenn sie in der Hauptströmungsrichtung V von zu reinigender Luft durchströmt wird, in einem ersten Betriebszustand arbeitet, in dem sie nur eine geringere Ozonmenge produziert, arbeitet sie im Systemreinigungsbetrieb, also bei Systemreinigungsbetrieb, in einem zweiten Betriebszustand, in dem sie eine größere Ozonmenge produziert. Die mit dieser größeren Ozonmenge angereicherte Luft strömt im Gegenstrom zur Hauptströmungsrichtung in die Abluftkanäle 16, 16' und 17' der Abluftkanalanordnung 17 hinein und desinfiziert deren Innenräume sowie deren Innenwandungen.

In der einfachsten Variante wird zur Erzielung des Systemreinigungsbetriebs das Luftschaufelrad 29" des Axialgebläses 29' mit zur Vorwärtsrichtung umgekehrter Drehrichtung betrieben, wodurch die Luft vom Axialgebläse 29' im Gegenstrom V' zur Hauptströmungsrichtung V durch das Elektrofiltermodul 30 und das Vorfiltermodul 20 in die Abluftkanäle 16, 16' und 17' der Abluftkanalanordnung 17 gefördert wird, wobei die Luft in dem im zweiten Betriebszustand arbeitenden Elektrofiltermodul 30 zur Erzielung der erhöhten Ozonkonzentration mit Ozon angereichert wird.

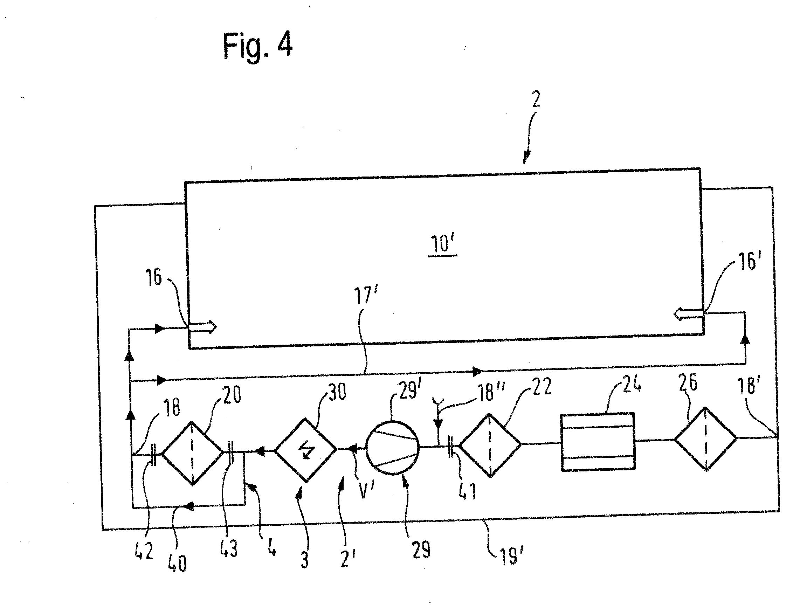

In der in Fig. 4 schematisch dargestellten speziellen Variante der Luftreinigungseinrichtung 2' eines erfindungsgemäßen Luftreinigungssystems 2 ist parallel zu dem vor der Elektrofiltereinheit 3 vorgesehenen Vorfiltermodul 20 ein schaltbarer Bypass 4 vorgesehen, der von einem Umgehungskanal 40 gebildet ist. Durch diesen Bypass 4 wird im Systemreinigungsbetrieb die von der Elektrofiltereinheit 3 im Gegenstrom V' heranströmende und dort mit Ozon angereicherte Luft am Vorfiltermodul 20 vorbei zu dem zumindest einen Rohlufteinlass 18 und von dort weiter in die Abluftkanalanordnung 17 geleitet. Dadurch wird im Systemreinigungsbetrieb eine Rückspülung des Vorfiltermoduls 20 vermieden. Ein - in den Figuren als vertikaler Doppelstrich dargestelltes - erstes Absperrventil 41 ist vor dem ersten mechanischen Hauptfiltermodul 22 vorgesehen und sperrt bei allen Varianten im Systemreinigungsbetrieb den Strömungsweg der Luft von der Elektrofiltereinheit 3 durch die nachgeordneten Filtermodule 22, 24 und 26 zum Reinluftauslass 18' und ermöglicht so im abgesperrten Zustand den Systemreinigungsbetrieb. Ein zweites Absperrventil 42 vor dem Vorfiltermodul 20 und ein drittes Absperrventil 43 hinter dem Vorfiltermodul 20 sind jeweils geschlossen und verhindern die Rückwärts-Durchströmung des Vorfiltermoduls 20.

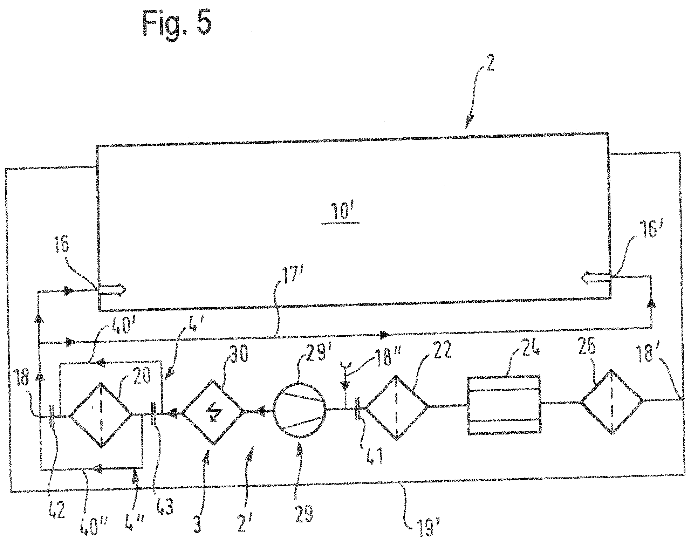

Bei der in Fig. 5 dargestellten abgewandelten Ausführungsvariante der speziellen Variante der Luftreinigungseinrichtung 2' eines erfindungsgemäßen Luftreinigungssystems 2 ist parallel zu dem vor der Elektrofiltereinheit 3 vorgesehenen Vorfiltermodul 20 ein erster schaltbarer Bypass 4' vorgesehen, der von einem ersten Rückleitungskanal 40' gebildet ist, durch den die mit Ozon angereicherte Luft im Systemreinigungsbetrieb von der Elektrofiltereinheit 3 vor das Vorfiltermodul 20 führbar ist. Die mit Ozon angereicherte Luft strömt dann lokal in der Hauptströmungsrichtung V durch das Vorfiltermodul 20. Die aus dem Vorfiltermodul 20 wieder austretende, mit Ozon angereicherte Luft wird anschließend durch einen zweiten schaltbaren Bypass 4", der von einem zweiten Rückleitungskanal 40" gebildet ist, zu dem zumindest einen Rohlufteinlass 18 geführt, von wo sie entgegen der Hauptströmungsrichtung V in die Abluftkanalanordnung 17 strömt. Dabei sind das zweite Absperrventil 42 und das dritte Absperrventil 43 so angeordnet, dass in deren geschlossenem Zustand der beschriebene Luftstrom durch das Vorfiltermodul 20 ermöglicht ist. Bei dieser Variante wird auch das Vorfiltermodul 20 in der Hauptströmungsrichtung V lokal von der mit Ozon angereicherten Luft durchströmt und desinfiziert.

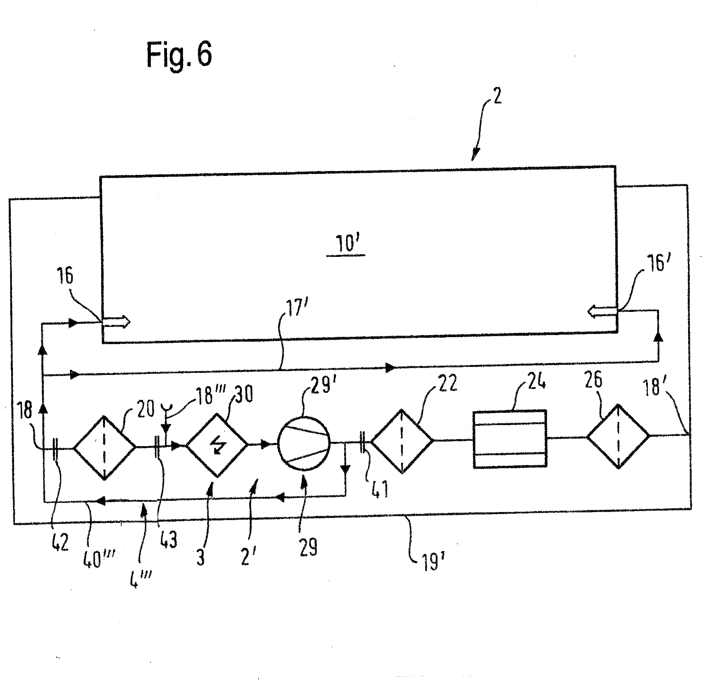

Bei der in Fig. 6 schematisch gezeigten alternativen Ausführungsform der Erfindung ist der Hilfslufteinlass 18‴ - in Hauptströmungsrichtung - vor der Elektrofiltereinheit 3 vorgesehen, sodass die Elektrofiltereinheit 30 auch im Systemreinigungsbetrieb vorwärts durchströmt wird, wobei als Strömungsumkehrvorrichtung ein Rückführkanal 40‴ als schaltbarer Bypass 4‴ vorgesehen ist, durch den die durch die Elektrofiltereinheit 3 hindurch geströmte Luft im Systemreinigungsbetrieb am Vorfilter 20 vorbei zurück zum Rohlufteinlass 18 und in die Abluftkanalanordnung 17 geleitet wird. Dabei sind das zweite Absperrventil 42 vor dem Vorfiltermodul 20 und das dritte Absperrventil 43 hinter dem Vorfiltermodul 20 geschlossen, um eine Rückwärts-Durchströmung des Vorfiltermoduls 20 zu verhindern.

Die Pfeile in den Fig. 3, 4, 5 und 6 geben jeweils die lokale Strömungsrichtung der Luft im Luftreinigungsbetrieb (Fig. 3) und im Systemreinigungsbetrieb (Fig. 4, 5 und 6) an.

Der erfindungsgemäße Systemreinigungsbetrieb lässt sich selbstverständlich auch erzielen, wenn die Elektrofiltereinheit 3 und/oder die Luftfördereinrichtung 29 in der Hauptströmungsrichtung V von der Luft durchströmt werden und die mit Ozon angereicherte Luft dann umgelenkt und durch entsprechende - nicht gezeigte - Rückführkanäle zum Rohlufteinlass 18 geleitet wird. Auch derartige Varianten sind von der Erfindung umfasst.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Luftfahrzeug
- 1': Rumpf
- 2: Luftreinigungssystem
- 2': Luftreinigungseinrichtung
- 3: Elektrofiltereinheit
- 4: schaltbarer Bypass
- 4': erster schaltbarer Bypass
- 4": zweiter schaltbarer Bypass
- 4‴: schaltbarer Bypass
- 10: Raum
- 10': Fahrzeugkabine
- 11: Technikraum
- 12: Zuluftkanal
- 12': Luftauslass
- 12": Luftauslass
- 13: Kabinen-Wandverkleidung
- 14: Zuluftkanal
- 14': Luftauslass
- 14": Luftauslass
- 15: Kabinen-Wandverkleidung
- 16: Abluftkanal
- 16': Abluftkanal
- 17: Abluftkanalanordnung
- 17': Abluftkanäle
- 18: Rohlufteinlass
- 18': Reinluftauslass
- 18": Hilfslufteinlass
- 18‴: Hilfslufteinlass
- 19: Reinluftkanalanordnung
- 19': Zuluftkanäle
- 20: (mechanisches) Vorfiltermodul
- 21: Filtermedium
- 22: erstes (mechanisches) Hauptfiltermodul
- 23: Filtermedium
- 24: physikalisch-chemisches Hauptfiltermodul
- 25: Aktivkohlefilter
- 26: zweites (mechanisches) Hauptfiltermodul
- 27: Filtermedium
- 28: integrale Filteranordnung
- 29: Luftfördereinrichtung
- 29': Axialgebläse
- 29": Luftschaufelrad
- 30: Elektrofiltermodul
- 30': Hochspannungselektrode
- 30": Steuerelektrode
- 30‴: dritte Elektrode
- 32: Stromversorgungsmodul
- 34: erste Elektrofilterstufe
- 36: zweite Elektrofilterstufe
- 40: Umgehungskanal
- 40': erster Rückleitungskanal
- 40": zweiter Rückleitungskanal
- 40‴: Rückführkanal
- 41: erstes Absperrventil
- 42: zweites Absperrventil
- 43: drittes Absperrventil

- A: Abluft
- P: Schadpartikel
- V: Hauptströmungsrichtung
- V': Gegenstrom
- Z: Zuluft

## Patentansprüche

1. Luftreinigungseinrichtung (2') mit zumindest einer Elektrofiltereinheit (3), zumindest einem Luftfiltermodul (20, 22, 24, 26) und zumindest einer Luftfördereinrichtung (29) zur Förderung von durch zumindest einen Rohlufteinlass (18) für zu reinigende Luft angesaugter Luft in einer Hauptströmungsrichtung (V) durch die Elektrofiltereinheit (3) und durch das zumindest eine Luftfiltermodul (20, 22, 24, 26) zu zumindest einem Reinluftauslass (18') für gereinigte Luft, wobei die Luftreinigungseinrichtung (2') zwischen einem Luftreinigungsbetrieb, in dem die Luft in der Hauptströmungsrichtung (V) strömt, und einem Systemreinigungsbetrieb, in dem die Luft zumindest partiell im Gegenstrom (V') zur Hauptströmungsrichtung (V) durch die Luftreinigungseinrichtung (2') strömt und durch den zumindest einen Rohlufteinlass (18) aus der Luftreinigungseinrichtung (2') austritt, umschaltbar ist, und wobei die Elektrofiltereinheit (3) im Systemreinigungsbetrieb zur Erzeugung von Ozon aktiviert oder aktivierbar ist, um die durch die Elektrofiltereinheit (3) strömende Luft mit Ozon anzureichern,
**dadurch gekennzeichnet,**
**dass** die Luftreinigungseinrichtung (2') so ausgebildet ist, dass Luftfiltermodule (20, 22, 24, 26) im Systemreinigungsbetrieb nicht entgegen ihrer jeweiligen lokalen Hauptströmungsrichtung (V) von der Luft durchströmt werden.

2. Luftreinigungseinrichtung nach Anspruch 1,
**dadurch gekennzeichnet,**
**dass** die Luftreinigungseinrichtung (2') so ausgebildet ist, dass die Luftfiltermodule (20, 22, 26) zur Partikel- oder Schwebstoffabscheidung im Systemreinigungsbetrieb nicht entgegen der lokalen Hauptströmungsrichtung (V) von der Luft durchströmt werden.

3. Luftreinigungseinrichtung nach Anspruch 1 oder 2,
**dadurch gekennzeichnet,**
**dass** die Luftreinigungseinrichtung (2') so ausgebildet ist, dass im Systemreinigungsbetrieb zumindest ein Teil der Luftfiltermodule (20, 22, 24, 26) in der lokalen Hauptströmungsrichtung (V) von der mit Ozon angereicherten Luft durchströmt wird.

4. Luftreinigungseinrichtung nach einem der vorhergehenden Ansprüche, **dadurch gekennzeichnet,**
**dass** zur Durchführung des Strömungsumkehrbetriebs die Luftförderrichtung der Luftfördereinrichtung (29) umkehrbar ist.

5. Luftreinigungseinrichtung nach einem der vorhergehenden Ansprüche , **dadurch gekennzeichnet,**
**dass** die Elektrofiltereinheit (3) so ausgebildet ist, dass sie in einem ersten Betriebszustand eine geringere Ozonmenge produziert als in einem zweiten Betriebszustand, und
**dass** die Elektrofiltereinheit (3) im Strömungsumkehrbetrieb der Luftfördereinrichtung (29) in den zweiten Betriebszustand schaltbar oder geschaltet ist.

6. Luftreinigungseinrichtung nach einem der vorhergehenden Ansprüche, **dadurch gekennzeichnet,**
**dass** in Hauptströmungsrichtung (V) hinter der Elektrofiltereinheit (3) zumindest eine Filtereinheit (28) mit zumindest einem Luftfiltermodul (22, 26) zur Partikelabscheidung und/oder mit zumindest einem Luftfiltermodul (24) zur Abscheidung von chemischen Luftbelastungen vorgesehen ist und dass der Strömungsweg der Luft von der Elektrofiltereinheit (3) durch diese nachgeordnete Filtereinheit (28) zum Reinluftauslass (18') im Strömungsumkehrbetrieb absperrbar oder abgesperrt ist.

7. Luftreinigungseinrichtung nach einem der vorhergehenden Ansprüche, **dadurch gekennzeichnet,**
**dass** die Luftreinigungseinrichtung (2') mit einem Hilfslufteinlass (18") versehen ist, durch den im Systemreinigungsbetrieb der Elektrofiltereinheit (3) Luft zuführbar ist.

8. Luftreinigungseinrichtung nach Anspruch 7,
**dadurch gekennzeichnet,**
**dass** der Hilfslufteinlass (18") in Hauptströmungsrichtung (V) der Luft hinter der Elektrofiltereinheit (3) vorgesehen ist.

9. Luftreinigungseinrichtung nach einem der vorhergehenden Ansprüche,
**dadurch gekennzeichnet,**
**dass** vor der Elektrofiltereinheit (3) ein Vorfiltermodul (20) zur Partikelabscheidung vorgesehen ist, das mit einem schaltbaren Bypass (4; 4‴) versehen ist, durch den die mit Ozon angereicherte Luft im Systemreinigungsbetrieb am Vorfiltermodul (20) vorbei zu dem zumindest einen Rohlufteinlass (18) leitbar ist.

10. Luftreinigungseinrichtung nach einem der Ansprüche 1 bis 8,
**dadurch gekennzeichnet,**
**dass** vor der Elektrofiltereinheit (3) ein Vorfiltermodul (20) zur Partikelabscheidung vorgesehen ist, das mit einem ersten schaltbaren Bypass (4') versehen ist, durch den die mit Ozon angereicherte Luft im Systemreinigungsbetrieb vor das Vorfiltermodul (20) führbar ist, und das mit einem zweiten schaltbaren Bypass (40") versehen ist, durch den die in der lokalen Hauptströmungsrichtung (V) durch das Vorfiltermodul (20) strömende, mit Ozon angereicherte Luft zu dem zumindest einen Rohlufteinlass (18) führbar ist.

11. Luftreinigungssystem für zumindest einen im Wesentlichen geschlossenen Raum (10), insbesondere einen Innenraum einer Fahrzeugkabine (10'), mit einer Luftreinigungseinrichtung (2') nach einem der vorhergehenden Ansprüche, wobei der zumindest eine Raum (10) durch eine Abluftkanalanordnung (17) mit dem zumindest einen Rohlufteinlass (18) der Luftreinigungseinrichtung (2') verbunden ist und wobei der zumindest eine Raum (10) durch eine Reinluftkanalanordnung (19) mit dem zumindest einen Reinluftauslass (18') der Luftreinigungseinrichtung (2') verbunden ist, **dadurch gekennzeichnet,**
**dass** die Luftreinigungseinrichtung (2') so ausgebildet ist, dass die mit Ozon angereicherte Luft im Systemreinigungsbetrieb durch den zumindest einen Rohlufteinlass (18) der Luftreinigungseinrichtung (2') in die Abluftkanalanordnung (17) des Raums (10) förderbar ist.

12. Verfahren zum Reinigen einer Luftreinigungseinrichtung (2') nach einem der Ansprüche 1 bis 10, in der zu reinigende Luft in einem Luftreinigungsbetrieb durch zumindest einen Rohlufteinlass (18) in einer Hauptströmungsrichtung (V) durch eine Elektrofiltereinheit (3) und durch zumindest ein Filtermodul (20, 22, 24, 26) zu zumindest einem Reinluftauslass (18') für gereinigte Luft gefördert wird und die zwischen diesem Luftreinigungsbetrieb und einem Systemreinigungsbetrieb, in dem die Luft zumindest partiell im Gegenstrom (V') zur Hauptströmungsrichtung (V) durch die Luftreinigungseinrichtung (2') strömt, umschaltbar ist,
**gekennzeichnet durch**
einen Systemreinigungsbetrieb, in dem Luft in der Elektrofiltereinheit (3) mit von dieser erzeugtem Ozon angereichert und im Systemreinigungsbetrieb durch die Luftreinigungseinrichtung (2') strömt und **durch** den zumindest einen Rohlufteinlass (18) aus der Luftreinigungseinrichtung (2') austritt, wobei die Filtermodule (20, 22, 24, 26) im Systemreinigungsbetrieb nicht entgegen ihrer jeweiligen lokalen Hauptströmungsrichtung (V) von der Luft durchströmt werden.

13. Verfahren nach Anspruch 12,
**dadurch gekennzeichnet,**
**dass** beim Systemreinigungsbetrieb keine Durchströmung von in der Luftreinigungseinrichtung (2') vorhandenen Luftfiltermodulen (20, 22, 26) zur Partikel- oder Schwebstoffabscheidung im Gegenstrom zur jeweiligen lokalen Hauptströmungsrichtung (V) erfolgt.

14. Verfahren zum Reinigen eines Luftreinigungssystems (2) für zumindest einen im Wesentlichen geschlossenen Raum (10) nach Anspruch 11, wobei das Verfahren zum Reinigen der Luftreinigungseinrichtung (2') nach Anspruch 12 durchgeführt wird,
**dadurch gekennzeichnet,**
**dass** die beim Systemreinigungsbetrieb durch den zumindest einen Rohlufteinlass (18) aus der Luftreinigungseinrichtung (2') austretende und mit Ozon angereicherte Luft durch die Abluftkanalanordnung (17) in den Raum (10) gefördert wird.

15. Fahrzeug, insbesondere Luftfahrzeug, mit einem Luftreinigungssystem gemäß Anspruch 11.

## Claims

1. An air purification device (2') comprising at least one electro filter unit (3), at least one air filter module (20, 22, 24, 26) and at least one air conveying device (29) for conveying air drawn in through at least one raw air inlet (18) for air to be purified in a main flow direction (V) through the electro filter unit (3) and through the at least one air filter module (20, 22, 24, 26) to at least one clean air outlet (18') for purified air, wherein the air purification device (2') can be switched between an air purification operation, in which the air flows in the main flow direction (V), and a system cleaning operation in which the air flows at least partially in counterflow (V') to the main flow direction (V) through the air purification device (2') and exits the air purification device (2') through the at least one raw air inlet (18), and wherein the electro filter unit (3) is activated or activatable in the system cleaning operation for generating ozone to enrich the air flowing through the electro filter unit (3) with ozone,
**characterized in that**
the air purification device (2') is designed in such a way that the air does not flow through air filter modules (20, 22, 24, 26) in counterflow to their respective local main flow direction (V) during system cleaning operation.

2. Air purification device according to claim 1,
**characterized in that**
the air purification device (2') is designed in such a way that the air does not flow through the air filter modules (20, 22, 26) for particle or suspended matter separation in counterflow to the local main flow direction (V) during system cleaning operation.

3. Air purification device according to claim 1 or 2,
**characterized in that**
the air purification device (2') is designed in such a way that, in system cleaning operation, at least a part of the air filter modules (20, 22, 24, 26) has the ozone-enriched air flowing through in the local main flow direction (V).

4. Air purification device according to any of the preceding claims,
**characterized in that**
the air conveying direction of the air conveying device (29) can be reversed in order to carry out the flow reversal operation.

5. Air purification device according to any of the preceding claims,
**characterized**
**in that** the electro filter unit (3) is designed to produce a smaller amount of ozone in a first operating state than in a second operating state, and
**in that** the electro filter unit (3) is switchable or switched to the second operating state in the flow reversal operation of the air conveying device (29).

6. Air purification device according to any of the preceding claims,
**characterized**
**in that** at least one filter unit (28) having at least one air filter module (22, 26) for particle separation and/or having at least one air filter module (24) for the separation of chemical air pollutants is provided downstream of the electro filter unit (3) in the main flow direction (V), and
**in that** the flow path of the air from the electro filter unit (3) through this downstream filter unit (28) to the clean air outlet (18') can be shut off or blocked off in flow reversal operation.

7. Air purification device according to any of the preceding claims,
**characterized in that**
the air purification device (2') is provided with an auxiliary air inlet (18") through which air can be supplied to the electro filter unit (3) during system cleaning operation.

8. Air purification device according to claim 7,
**characterized in that**
the auxiliary air inlet (18") is provided downstream of the electro filter unit (3) in the main flow direction (V) of the air.

9. Air purification device according to any of the preceding claims,
**characterized in that**
a prefilter module (20) for particle separation is provided upstream of the electro filter unit (3), which prefilter module (20) is provided with a switchable bypass (4; 4‴) through which the air enriched with ozone can be guided past the prefilter module (20) to the at least one raw air inlet (18) during system cleaning operation.

10. Air purification device according to any one of claims 1 to 8,
**characterized in that**
a prefilter module (20) for particle separation is provided upstream of the electro filter unit (3), which prefilter module (20) is provided with a first switchable bypass (4') through which the ozone-enriched air can be passed upstream of the prefilter module (20) during system cleaning operation, and which is provided with a second switchable bypass (40"), through which the ozone-enriched air flowing through the prefilter module (20) in the local main flow direction (V) can be guided to the at least one raw air inlet (18).

11. Air purification system for at least one substantially closed room (10), in particular an interior of a vehicle cabin (10'), with an air purification device (2') according to one of the preceding claims, wherein the at least one room (10) is connected to the at least one raw air inlet (18) of the air purification device (2') by an exhaust air duct arrangement (17), and wherein the at least one room (10) is connected to the at least one clean air outlet (18') of the air purification device (2') by a clean air duct arrangement (19),
**characterized in that**
the air purification device (2') is designed in such a way that the air enriched with ozone can be conveyed through the at least one raw air inlet (18) of the air purification device (2') into the exhaust air duct arrangement (17) of the room (10) during system cleaning operation.

12. Method for cleaning an air purification device (2') according to one of claims 1 to 10, in which air to be purified is conveyed in an air purification operation through at least one raw air inlet (18) in a main flow direction (V) through an electro filter unit (3) and through at least one filter module (20, 22, 24, 26) to at least one clean air outlet (18') for purified air and which is switchable between this air purification operation and a system cleaning operation in which the air flows through the air purification device (2') at least partially in counterflow (V') to the main flow direction (V),
**characterized by**
a system cleaning operation in which air in the electro filter unit (3) is enriched with ozone generated by the latter and flows through the air purification device (2') in the system cleaning operation and exits from the air purification device (2') through the at least one raw air inlet (18), wherein the filter modules (20, 22, 24, 26) are not flowed through by the air against their respective local main flow direction (V) in the system cleaning operation.

13. Method according to claim 12,
**characterized in that**
**in that**, during system cleaning operation, there is no flow through air filter modules (20, 22, 26) present in the air purification device (2') for particle or suspended matter separation in counterflow to the respective local main flow direction (V).

14. Method for cleaning an air purification system (2) for at least one substantially closed room (10) according to claim 11, wherein the method for cleaning the air purification device (2') is performed according to claim 12,
**characterized in that**
the air which, during system cleaning operation, emerges from the air purification device (2') through the at least one raw air inlet (18) and which is enriched with ozone is conveyed into the room (10) through the exhaust air duct arrangement (17).

15. Vehicle, in particular aircraft, with an air purification system according to claim 11.

## Revendications

1. Dispositif de purification d'air (2') comprenant au moins une unité d'électrofiltre (3), au moins un module de filtre à air (20, 22, 24, 26) et au moins un dispositif de transport d'air (29) destiné à transporter l'air, aspiré par au moins une entrée d'air brut (18) pour l'air à purifier, dans un sens d'écoulement principal (V) à travers l'unité d'électrofiltre (3) et à travers ledit au moins un module de filtre à air (20, 22, 24, 26) vers au moins une sortie d'air pur (18') pour l'air purifié,
dans lequel
le dispositif de purification d'air (2') peut être commuté entre un mode de purification d'air dans lequel l'air s'écoule dans le sens d'écoulement principal (V), et un mode de purification de système dans lequel l'air s'écoule à travers le dispositif de purification d'air (2') au moins partiellement à contre-courant (V') par rapport au sens d'écoulement principal (V) et sort du dispositif de purification d'air (2') par ladite au moins une entrée d'air brut (18), et
dans le mode de purification de système, l'unité d'électrofiltre (3) est activée ou peut être activée pour produire de l'ozone afin d'enrichir en ozone l'air qui s'écoule à travers l'unité d'électrofiltre (3),
**caractérisé en ce que**
le dispositif de purification d'air (2') est conçu de telle sorte qu'en mode de purification de système, les modules de filtre à air (20, 22, 24, 26) ne sont pas traversés par l'air dans le sens opposé à leur sens d'écoulement principal local respectif (V).

2. Dispositif de purification d'air selon la revendication 1,
**caractérisé en ce que**
le dispositif de purification d'air (2') est conçu de telle sorte qu'en mode de purification de système, les modules de filtre à air (20, 22, 26) destinés à la séparation des particules ou des matières en suspension ne sont pas traversés par l'air dans le sens opposé au sens d'écoulement principal local (V).

3. Dispositif de purification d'air selon la revendication 1 ou 2,
**caractérisé en ce que**
le dispositif de purification d'air (2') est conçu de telle sorte qu'en mode de purification de système, au moins une partie des modules de filtre à air (20, 22, 24, 26) est traversée par l'air enrichi en ozone dans le sens d'écoulement principal local (V).

4. Dispositif de purification d'air selon l'une des revendications précédentes, **caractérisé en ce que**
pour la mise en œuvre du mode d'inversion d'écoulement, le sens de transport d'air du dispositif de transport d'air (29) peut être inversé.

5. Dispositif de purification d'air selon l'une des revendications précédentes, **caractérisé en ce que**
l'unité d'électrofiltre (3) est conçue de manière à produire une quantité d'ozone plus faible dans un premier état de fonctionnement que dans un deuxième état de fonctionnement, et
**en ce que** l'unité d'électrofiltre (3) peut être commutée ou est commutée dans le deuxième état de fonctionnement, en mode d'inversion d'écoulement du dispositif de transport d'air (29).

6. Dispositif de purification d'air selon l'une des revendications précédentes, **caractérisé en ce que**
il est prévu, en aval de l'unité d'électrofiltre (3) dans le sens d'écoulement principal (V), au moins une unité de filtre (28) ayant au moins un module de filtre à air (22, 26) destiné à la séparation des particules et/ou ayant au moins un module de filtre à air (24) destiné à la séparation des charges chimiques de l'air, et
**en ce que** le trajet d'écoulement de l'air depuis l'unité d'électrofiltre (3) à travers cette unité de filtre (28), disposée en aval, jusqu'à la sortie d'air pur (18') peut être bloqué ou est bloqué en mode d'inversion d'écoulement.

7. Dispositif de purification d'air selon l'une des revendications précédentes, **caractérisé en ce que**
le dispositif de purification d'air (2') est pourvu d'une entrée d'air auxiliaire (18") par laquelle, en mode de purification de système, de l'air peut être amené à l'unité d'électrofiltre (3).

8. Dispositif de purification d'air selon la revendication 7,
**caractérisé en ce que**
l'entrée d'air auxiliaire (18") est prévue en aval de l'unité d'électrofiltre (3) dans le sens d'écoulement principal (V) de l'air.

9. Dispositif de purification d'air selon l'une des revendications précédentes, **caractérisé en ce que**
il est prévu, en amont de l'unité d'électrofiltre (3), un module de préfiltre (20) destiné à la séparation des particules, qui est pourvu d'une dérivation commutable (4 ; 4‴) par laquelle l'air enrichi en ozone peut être dirigé, en mode de purification de système, vers ladite au moins une entrée d'air brut (18) en passant devant le module de préfiltre (20).

10. Dispositif de purification d'air selon l'une des revendications 1 à 8, **caractérisé en ce que**
il est prévu, en amont de l'unité d'électrofiltre (3), un module de préfiltre (20) destiné à la séparation des particules, qui est pourvu d'une première dérivation commutable (4') par laquelle l'air enrichi en ozone peut être amené, en mode de purification de système, devant le module de préfiltre (20), et qui est pourvu d'une deuxième dérivation commutable (40") par laquelle l'air enrichi en ozone, s'écoulant dans le sens d'écoulement principal local (V) à travers le module de préfiltre (20), peut être amené vers ladite au moins une entrée d'air brut (18).

11. Système de purification d'air pour au moins un espace (10) sensiblement fermé, en particulier un espace intérieur d'une cabine de véhicule (10'), comprenant un dispositif de purification d'air (2') selon l'une des revendications précédentes,
dans lequel
ledit au moins un espace (10) est relié à ladite au moins une entrée d'air brut (18) du dispositif de purification d'air (2') par l'intermédiaire d'un agencement de conduit d'air vicié (17), et
ledit au moins un espace (10) est relié à ladite au moins une sortie d'air pur (18') du dispositif de purification d'air (2') par l'intermédiaire d'un agencement de conduit d'air pur (19),
**caractérisé en ce que**
le dispositif de purification d'air (2') est conçu de telle sorte que l'air enrichi en ozone peut être transporté, en mode de purification de système, jusque dans l'agencement de conduit d'air vicié (17) de l'espace (10) par ladite au moins une entrée d'air brut (18) du dispositif de purification d'air (2').

12. Procédé de purification d'un dispositif de purification d'air (2') selon l'une des revendications 1 à 10, dispositif dans lequel, dans un mode de purification d'air, l'air à purifier est transporté vers au moins une sortie d'air pur (18') pour l'air purifié par au moins une entrée d'air brut (18) dans un sens d'écoulement principal (V) à travers une unité d'électrofiltre (3) et à travers au moins un module de filtre (20, 22, 24, 26), et qui peut être commuté entre ledit mode de purification d'air et un mode de purification de système dans lequel l'air s'écoule à travers le dispositif de purification d'air (2') au moins partiellement à contre-courant (V') par rapport au sens d'écoulement principal (V),
**caractérisé par**
un mode de purification de système dans lequel l'air dans l'unité d'électrofiltre (3) est enrichi en ozone produit par celle-ci et s'écoule à travers le dispositif de purification d'air (2'), en mode de purification de système, et sort du dispositif de purification d'air (2') par ladite au moins une entrée d'air brut (18), les modules de filtre (20, 22, 24, 26) n'étant pas traversés par l'air en sens opposé à leur sens d'écoulement principal local respectif (V), en mode de purification de système.

13. Procédé selon la revendication 12,
**caractérisé en ce que**, en mode de purification de système, il n'y a pas d'écoulement à travers les modules de filtre à air (20, 22, 26), présents dans le dispositif de purification d'air (2') et destinés à la séparation des particules ou des matières en suspension, à contre-courant par rapport au sens d'écoulement principal local respectif (V).

14. Procédé de purification d'un système de purification d'air (2) pour au moins un espace sensiblement fermé (10) selon la revendication 11, mettant en œuvre le procédé de purification du dispositif de purification d'air (2') selon la revendication 12,
**caractérisé en ce que**
l'air enrichi en ozone, sortant du dispositif de purification d'air (2') par ladite au moins une entrée d'air brut (18) en mode de purification de système, est transporté vers l'espace (10) par l'intermédiaire de l'agencement de conduit d'air vicié (17).

15. Véhicule, en particulier aéronef, comportant un système de purification d'air selon la revendication 11.
